# EUROPÄISCHE PATENTANMELDUNG

(11) **EP 3 483 002 A1**
(43) Veröffentlichungstag der Anmeldung: **15.05.2019**
(21) Anmeldenummer: 18204557.5
(22) Anmeldetag: 06.11.2018
(51) Int. Cl.: B60N 2/58, D05B 1/24, D05B 85/06

(54) **SITZBEZUG, FAHRZEUGSITZ UND VERFAHREN ZUR HERSTELLUNG EINES SITZBEZUGES**

(30) Priorität: 08.11.2017 DE 102017126141
(71) Anmelder: Bader GmbH & Co. KG, 73033 Göppingen (DE)
(72) Erfinder: Schulte, Marion, 73230 Kirchheim unter Teck (DE); Kormeew, Regina, 72622 Nürtingen (DE); Reischl, Verena, 71672 Marbach (DE); Lewen, Dimitri, 73066 Uhingen (DE); Angele, Johannes, 73117 Wangen (DE); Turan, Süleyman, 73278 Schlierbach (DE); Schiedlauske, Kevin, 73207 Plochingen (DE)
(74) Vertreter: Pfiz, Thomas

(57) **Zusammenfassung**

Sitzbezug (14) für einen Fahrzeugsitz (10) mit einer zumindest zweilagigen Verbundstruktur aus einer dekorseitigen Oberseitenlage (20) und einer mit dem Fahrzeugsitz (10) in Anlage bringbaren Unterseitenlage (22), und mit einem an der Unterseitenlage (22) angeordneten, insbesondere als Bezugsabheftung (16') ausgebildeten Funktionsteil (16). Das Funktionsteil (16) ist durch eine dekorseitig nicht sichtbare Blindstichnaht (26) mit der Unterseitenlage (22) verbunden, wobei die Blindstichnaht (26) die Oberseitenlage (20) nicht durchgreift.

## Beschreibung

Die Erfindung betrifft einen Sitzbezug für einen Fahrzeugsitz mit einer zumindest zweilagigen Verbundstruktur aus einer dekorseitigen Oberseitenlage und einer mit dem Fahrzeugsitz in Anlage bringbaren Unterseitenlage, und mit einem an der Unterseitenlage angeordneten Funktionsteil. Die Erfindung betrifft weiter einen Fahrzeugsitz mit einem solchen Sitzbezug und ein geeignetes Herstellungsverfahren.

Eine Bezugsabheftung für eine Sitzanlage eines Fahrzeugs ist aus der DE 10 2016 001 821 A1 bekannt. Dort wird eine Abhefteinrichtung zum Heften des Sitzbezuges an wenigstens ein Bauelement einer Kraftfahrzeug-Sitzanlage vorgeschlagen, wobei die Abhefteinrichtung stoffschlüssig mit der Rückseite des Sitzbezuges verbunden ist. Durch das stoffschlüssige Verbinden der Abhefteinrichtung mit dem Sitzbezug sollen unerwünschte optische Beeinträchtigungen des Sitzbezuges vermieden werden. Die Verklebung bedingt allerdings einen hohen Herstellungsaufwand. Der Klebstoff muss automobil-tauglich sein und auch unter hohen thermischen Belastungen eine lange Standfestigkeit garantieren. Außerdem kann auch ein Klebstoff nachteilige Auswirkungen auf die Dekorseite des Sitzbezuges haben.

Ausgehend hiervon liegt der Erfindung die Aufgabe zugrunde, die im Stand der Technik bekannten Erzeugnisse und Verfahren weiter zu verbessern und eine einfach herstellbare, dauerhaft haltbare und ohne Beeinträchtigung der Sichtseite und ohne gestalterische Beschränkungen einsetzbare Konstruktion anzugeben.

Zur Lösung dieser Aufgabe wird die in den unabhängigen Patentansprüchen angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, ein Funktionsteil an einem Sitzbezug nur mit dessen Rückseite zu verheften. Demzufolge wird erfindungsgemäß vorgeschlagen, dass das Funktionsteil durch eine dekorseitig nicht sichtbare Blindstichnaht mit der Unterseitenlage verbunden ist, wobei die Blindstichnaht die Oberseitenlage nicht durchgreift und vorzugsweise auch nicht berührt. Dadurch kann eine strukturelle linienförmige Verbindung dauerhaft geschaffen werden, wobei die Nahtführung auf der Bezugsrückseite willkürlich platziert werden kann und sichtseitig keine Nachteile mit sich bringt.

Vorteilhafterweise ist die Blindstichnaht nicht als Einfachblindstichnaht, sondern als eine aus zwei Fäden gebildete Doppelsteppstich-Blindstichnaht ausgeführt. Dadurch werden zwei parallele Nahtlinien gebildet, die einerseits an der Unterseitenlage und andererseits an dem Funktionsteil verankert sind und so eine hohe Stabilität schaffen, ohne dass die Naht allzu leicht aufgehen könnte.

Eine besonders bevorzugte Anwendung sieht vor, dass das Funktionsteil durch eine Bezugsabheftung zur Verankerung des Sitzbezugs an einem Grundkörper bzw. einer Polsterauflage des Fahrzeugsitzes gebildet ist. Auf diese Weise steht nahezu das gesamte Abheftprofil der Bezugsabheftung für eine konventionelle Verankerung in dem Sitzgrundkörper zur Verfügung, während optische bzw. gestalterische Beeinträchtigungen der Sichtseite komplett vermieden werden.

In diesem Zusammenhang ist es auch von Vorteil, wenn die Bezugsabheftung einen bahnförmigen Abheftstreifen aufweist, wobei die Blindstichnaht entlang einem Längsrand des Abheftstreifens geführt ist.

Eine weitere Verbesserung hinsichtlich einer sicheren und lagestabilen Verbindung wird dadurch erreicht, dass die Bezugsabheftung an einem von der Blindstichnaht beabstandeten freien Längsrand eine Seele beispielsweise aus Draht oder Kunststoff zur Verankerung in einem Kanal des Grundkörpers bzw. der Polsterauflage aufweist. Eine weitere Verbesserung der gestalterischen Möglichkeiten lässt sich dadurch erreichen, dass die Oberseitenlage und die Unterseitenlage durch Ziernähte miteinander verbunden sind, und dass die Blindstichnaht unabhängig von den Ziernähten verläuft.

Um ein Aufgehen der Naht zu vermeiden, ist es günstig, wenn an den Enden der Blindstichnaht jeweils eine durch eine Fadenverschlingung und/oder Verklebung erzeugte Nahtverdichtung bzw. Verriegelung vorgesehen ist, so dass die Fäden gegen Lösen gesichert sind.

Grundsätzlich bietet die Nahtverbindung durch eine Blindstichnaht reiche Anwendungsmöglichkeiten, wobei das Funktionsteil ein Element aus der Gruppe Abhefteinrichtungen, Verstärkungstextilbänder, Gummibänder, Sitzheizungen, Sitzbelegungserkennungen umfassen kann.

Eine bevorzugte Anwendung ergibt sich auch daraus, dass der Sitzbezug ein Ledermaterial, Kunstleder oder Textilmaterial als Oberseitenlage aufweist, und dass der Sitzbezug eine vorzugsweise geschäumte Polsterschicht und/oder ein textiles Flächengebilde als Teil der Unterseitenlage aufweist.

Gegenstand der Erfindung ist auch ein Fahrzeugsitz mit einem Grundkörper bzw. der Polsterauflage und einem darauf angeordneten Sitzbezug wie vorstehend beschrieben.

Ein weiterer Erfindungsaspekt liegt in einem Verfahren zur Herstellung eines Sitzbezuges für einen Fahrzeugsitz, bei welchem eine mindestens zweilagige Verbundstruktur aus einer dekorseitigen Oberseitenlage und einer mit dem Fahrzeugsitz in Anlage bringbaren Unterseitenlage bereitgestellt wird, und bei welchem an der Unterseitenlage ein Funktionsteil vorzugsweise in Form einer Bezugsabheftung angebracht wird. Hier wird zur Lösung der eingangs genannten Aufgabe vorgeschlagen, dass das Funktionsteil durch eine dekorseitig nicht sichtbare Blindstichnaht mit der Unterseitenlage verbunden wird, wobei die Blindstichnaht die Oberseitenlage nicht durchgreift. Damit lassen sich die vorstehend erwähnten Vorteile in analoger Weise erreichen.

Für die Herstellung der Blindstichnaht ist es vorteilhaft, wenn ein Nähfaden mittels einer gebogenen Nähnadel durch die Unterseitenlage so geführt wird, dass er unter Bildung einer Schleife an der Unterseitenlage ein- und austritt.

Eine weitere herstellungstechnische Verbesserung lässt sich dadurch erzielen, dass beim Nähen der Blindstichnaht ein Taucher einer Nähmaschine koordiniert mit der Nadelbewegung gegen die Oberseitenlage geführt wird, so dass die Unterseitenlage im Nahtbereich aufgewölbt wird, um dort das Ein- und Ausstechen zu ermöglichen.

Im Folgenden wird die Erfindung anhand eines in der Zeichnung in schematischer Weise dargestellten Ausführungsbeispiels näher erläutert. Es zeigen:
- Fig. 1: ein Fahrzeugsitzteil mit einem Sitzbezug und einer Bezugsabheftung in einer teils aufgebrochenen perspektivischen Darstellung;
- Fig. 2: einen Schnitt entlang der Linie 2 - 2 der Fig. 1;
- Fig. 3: eine Doppelsteppstich-Blindstichnaht in einer abgebrochenen schaubildlichen Darstellung;
- Fig. 4: eine Ausschnittvergrößerung der Fig. 1;
- Fig. 5: das Nähen der Blindstichnaht in einer schematischen Schnittdarstellung; und
- Fig. 6: die entsprechend Fig. 3 erzeugte Doppelsteppstich-Blindstichnaht zur unsichtbaren Verbindung der Bezugsabheftung mit dem Sitzbezug.

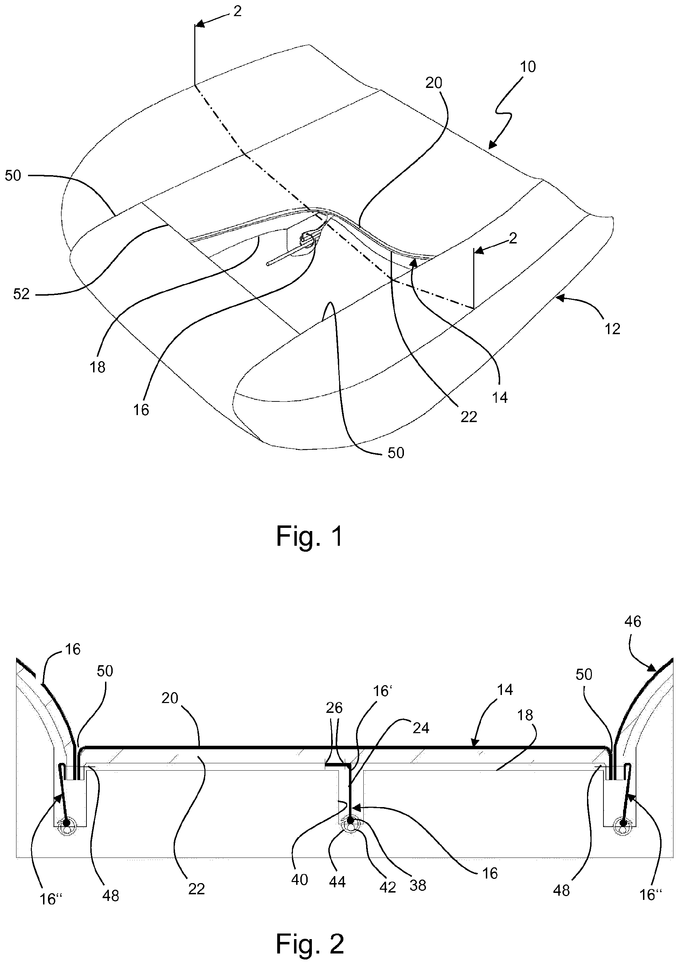

In Fig. 1 ist ein Kraftfahrzeugsitz 10 mit einem Sitzteil 12 dargestellt, das von einem flexiblen Sitzbezug 14 überdeckt ist, wobei als Funktionsteil 16 eine Bezugsabheftung 16' eine unsichtbare Verankerung des Sitzbezuges 14 an einem Grundkörper bzw. einer Polsterauflage 18 des Sitzteils 12 ermöglicht.

Wie auch aus Fig. 2 ersichtlich, ist der Sitzbezug 14 als zweilagige Verbundstruktur aus einer dekor- bzw. sichtseitigen Oberseitenlage 20 und einer davon abgewandten, mit dem Grundkörper 18 in Anlage bringbaren Unterseitenlage 22 gebildet. Die Oberseitenlage 20 kann beispielsweise aus einem Ledermaterial bestehen, während die ggf. mehrschichtige Unterseitenlage 22 eine geschäumte Polsterschicht und/oder ein textiles Flächengebilde umfassen kann.

Die Bezugsabheftung 16' weist einen flexiblen bahnförmigen Abheftstreifen 24 auf, der entlang einem Längsrand über eine Blindstichnaht 26 mit der Unterseitenlage 22 verbunden ist. Die Blindstichnaht 26 ist dabei so geführt, dass sie die Oberseitenlage 20 nicht durchgreift oder berührt und somit dekorseitig nicht sichtbar ist.

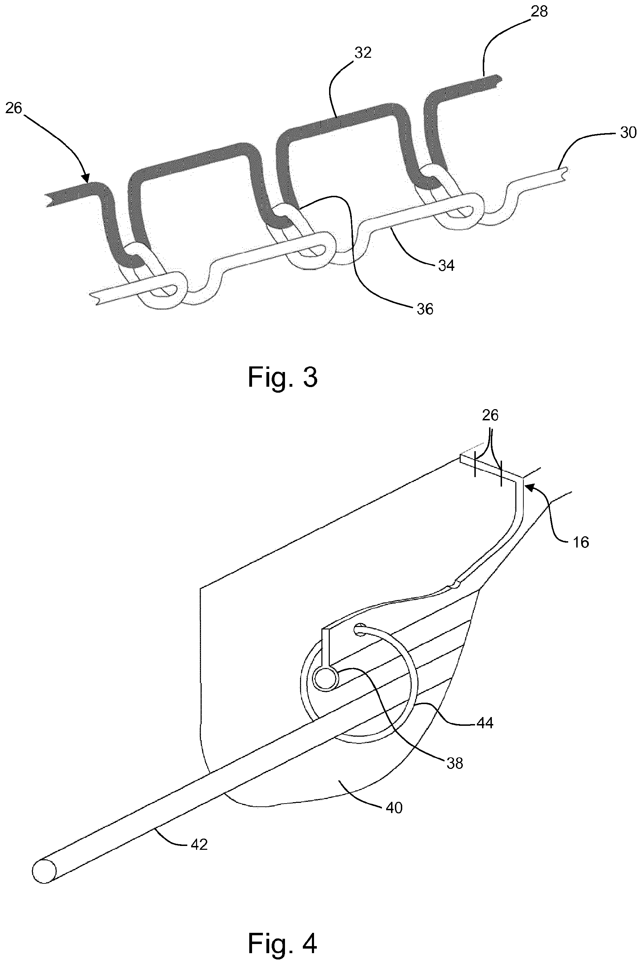

Fig. 3 illustriert die besondere Ausführung der Blindstichnaht 26 als eine aus zwei Fäden 28, 30 gebildete Doppelsteppstich-Blindstichnaht. Deren parallel zueinander verlaufende Nahtstege 32, 34 liegen rückseitig auf der Unterseitenlage 22 bzw. auf dem Abheftstreifen 24 auf, während die Fadenverschlingungen 36 innerhalb der Unterseitenlage 22 gebildet sind. An den Nahtenden kann jeweils eine Nahtverdichtung durch eine geeignete mehrfache Fadenverschlingung vorgesehen sein (nicht gezeigt) .

Wie am besten in Fig. 4 erkennbar, weist die Bezugsabheftung 16' an einem von der nur symbolisch gezeigten Blindstichnaht 26 beabstandeten freien Längsrand eine Abheftseele (z.B. aus Draht oder Kunststoff) 38 auf, die sich in einem Kanal 40 des Grundkörpers 18 verankern lässt. Zu diesem Zweck ist in dem Kanal 40 ein Befestigungselement 42 (z.B. ein Haltedraht oder Klipse) vorgesehen, das in an sich bekannter Weise mit der Abheftseele 38 an gewünschten Stellen durch Polsterklammern 44 zusammengehalten ist. Auf diese Weise ist gewährleistet, dass der Sitzbezug 14 in seiner vorgesehenen Lage fixiert bleibt und keine Falten wirft.

Wie in Fig. 2 gezeigt, können Segmente bzw. Zuschnitte 46 des Sitzbezuges 14 beispielsweise an den Sitzwangen auch durch Schließnähte 48 verbunden sein, welche die Oberseitenlage 20 durchgreifen und zugleich zum Anheften von weiteren Bezugsabheftungen 16" dienen. Dadurch wird eine dekorseitig sichtbare Verbindungslinie 50 erzeugt, während die Blindstichnaht 26 keinen Einfluss auf das sichtbare Design hat. Denkbar ist es auch, dass die Oberseitenlage 20 und die Unterseitenlage 22 durch mindestens eine Ziernaht 52 miteinander verbunden sind (Fig. 1), wobei mindestens eine Blindstichnaht 26 unabhängig von der Ziernaht 52 verläuft.

Grundsätzlich ist es auch möglich, andere Funktionsteile 16 wie Verstärkungstextilbänder, Gummibänder, Sitzheizungen oder Sitzbelegungserkennungen durch eine Blindstichnaht 26 rückseitig an den Sitzbezug 14 anzuheften, ohne das sichtbare Design optisch zu beeinflussen.

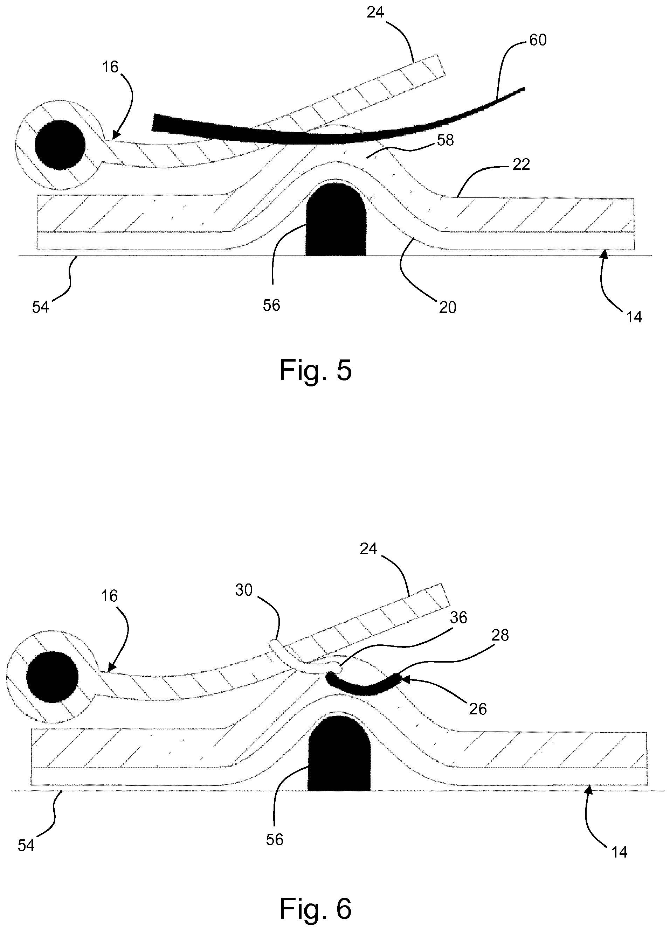

Fig. 5 und 6 veranschaulichen die Herstellung einer Blindstichnaht 26 in der Unterseitenlage 22 ohne Berührung der Oberseitenlage 20. Zu diesem Zweck wird in einer Blindstichmaschine 54 an der gewünschten Nahtstelle ein Taucher 56 gegen die Oberseitenlage 20 geführt, so dass die Unterseitenlage 22 einen Wulst 58 bildet. Durch diesen Wulst 58 wird das Fadenmaterial mittels einer gebogenen Nähnadel 60 hindurchgeführt. Die Nähnadel 60 wirkt mit einem nicht gezeigten Greifer, der sich oberhalb einer Stichplatte befindet, zusammen. Dabei sticht die Nähnadel 60 in die Unterseitenlage 22 ein und wieder aus. Beim Ausstechen nimmt der Greifer den Nähfaden auf und führt ihn um eine Fadenspule, sodass eine Verschlingung 36 der Fäden 28, 30 entsteht. Durch die Rückwärtsbewegung der Nähnadel 60 wird die Verschlingung fixiert, sodass ein weiterer Stich gebildet werden kann.

## Patentansprüche

1. Sitzbezug (14) für einen Fahrzeugsitz (10) mit einer zumindest zweilagigen Verbundstruktur aus einer dekorseitigen Oberseitenlage (20) und einer mit dem Fahrzeugsitz (10) in Anlage bringbaren Unterseitenlage (22), und mit einem an der Unterseitenlage (22) angeordneten Funktionsteil (16), **dadurch gekennzeichnet, dass** das Funktionsteil (16) durch eine dekorseitig nicht sichtbare Blindstichnaht (26) mit der Unterseitenlage (22) verbunden ist, wobei die Blindstichnaht (26) die Oberseitenlage (20) nicht durchgreift.

2. Sitzbezug (14) nach Anspruch 1, **dadurch gekennzeichnet, dass** die Blindstichnaht (26) als eine aus zwei Fäden (28,30) gebildete Doppelsteppstich-Blindstichnaht ausgeführt ist.

3. Sitzbezug (14) nach Anspruch 1 oder 2, **dadurch gekennzeichnet, dass** das Funktionsteil (16) durch eine Bezugsabheftung (16') zur Verankerung des Sitzbezugs (14) an einem Grundkörper bzw. einer Polsterauflage (18) des Fahrzeugsitzes (10) gebildet ist.

4. Sitzbezug (14) nach Anspruch 3, **dadurch gekennzeichnet, dass** die Bezugsabheftung (16') einen bahnförmigen Abheftstreifen (24) aufweist, wobei die Blindstichnaht (26) entlang einem Längsrand des Abheftstreifens (24) geführt ist.

5. Sitzbezug (14) nach Anspruch 3 oder 4, **dadurch gekennzeichnet, dass** die Bezugsabheftung (16') an einem von der Blindstichnaht (26) beabstandeten freien Längsrand eine Seele (38) beispielsweise aus Draht zur Verankerung in einem Kanal (40) des Grundkörpers (18) aufweist.

6. Sitzbezug (14) nach einem der Ansprüche 1 bis 5,
**dadurch gekennzeichnet, dass** die Oberseitenlage (20) und die Unterseitenlage (22) durch mindestens eine Ziernaht oder Kaschierung miteinander verbunden sind, wobei die Blindstichnaht (26) unabhängig davon verläuft.

7. Sitzbezug (14) nach einem der Ansprüche 1 bis 6,
**dadurch gekennzeichnet, dass** an den Enden der Blindstichnaht (26) jeweils eine durch eine Fadenverschlingung und/oder Verklebung erzeugte Fadenverriegelung vorgesehen ist.

8. Sitzbezug (14) nach einem der Ansprüche 1 bis 7,
**dadurch gekennzeichnet, dass** das Funktionsteil (16) ein Element aus der Gruppe Abhefteinrichtungen (16'), Verstärkungstextilbänder, Gummibänder, Sitzheizungen, Sitzbelegungserkennungen umfasst.

9. Sitzbezug (14) nach einem der Ansprüche 1 bis 7,
**dadurch gekennzeichnet, dass** der Sitzbezug (14) ein Ledermaterial, Kunstleder oder Textilmaterial als Oberseitenlage (20) aufweist.

10. Sitzbezug (14) nach einem der Ansprüche 1 bis 7,
**dadurch gekennzeichnet, dass** der Sitzbezug (14) eine vorzugsweise geschäumte Polsterschicht und/oder ein textiles Flächengebilde als Teil der Unterseitenlage (22) aufweist.

11. Fahrzeugsitz (10) mit einem Grundkörper bzw. einer Polsterauflage (18) und einem darauf angeordneten Sitzbezug (14) nach einem der vorhergehenden Ansprüche.

12. Verfahren zur Herstellung eines Sitzbezuges (14) für einen Fahrzeugsitz (10), bei welchem eine mindestens zweilagige Verbundstruktur aus einer dekorseitigen Oberseitenlage (20) und einer mit dem Fahrzeugsitz (10) in Anlage bringbaren Unterseitenlage (22) bereitgestellt wird, und bei welchem an der Unterseitenlage (22) ein Funktionsteil (16) vorzugsweise in Form einer Bezugsabheftung (16') angebracht wird, **dadurch gekennzeichnet, dass** das Funktionsteil (16) durch eine dekorseitig nicht sichtbare Blindstichnaht (26) mit der Unterseitenlage (22) verbunden wird, wobei die Blindstichnaht (26) die Oberseitenlage (20) nicht durchgreift.

13. Verfahren nach Anspruch 12, **dadurch gekennzeichnet, dass** ein Nähfaden mittels einer gebogenen Nähnadel (60) durch die Unterseitenlage (22) so geführt wird, dass er unter Bildung einer Schleife an der Unterseitenlage (22) ein- und austritt.

14. Verfahren nach Anspruch 12 oder 13, **dadurch gekennzeichnet, dass** beim Nähen der Blindstichnaht (26) ein Taucher (56) gegen die Oberseitenlage (20) geführt wird, so dass die Unterseitenlage (22) im Nahtbereich aufgewölbt wird.
